# DEMANDE DE BREVET EUROPEEN

(11) **EP 1 284 584 A1**
(43) Date de publication de la demande: **19.02.2003**
(21) Numéro de dépôt: 02291989.8
(22) Date de dépôt: 07.08.2002
(51) Int. Cl.: H04Q 11/04, H04Q 3/00

(54) **Procédé et dispositif pour dévier un flux d'informations entre deux multiplexeurs temporels**

(30) Priorité: 13.08.2001 FR 0110775
(71) Demandeur: FRANCE TELECOM, 75015 Paris (FR)
(72) Inventeur: Bennia-Latreche, Karim, 31170 Tournefeuille (FR)
(74) Mandataire: Habasque, Etienne Joel Jean-François

(57) **Abrégé**

Procédé pour dévier au moins un flux d'informations transporté par une première liaison (22) entre deux multiplexeurs temporels (20, 24) vers au moins une seconde liaison (36) entre ces deux mêmes multiplexeurs, chacun desdits multiplexeurs (20, 24) comportant des instructions de déviation dudit au moins un flux d'informations de la première liaison vers ladite au moins une seconde liaison. Il comporte une première étape (54) d'activation simultanée dans les deux multiplexeurs (20, 24) de ces instructions de déviation du flux de la première liaison vers la seconde liaison.

## Description

L'invention concerne un procédé et un système pour dévier un flux d'informations transporté par une première liaison entre deux multiplexeurs temporels vers au moins une seconde liaison entre ces deux mêmes multiplexeurs.

Par « dévier » on entend ici modifier le trajet par lequel un ou plusieurs flux d'informations sont transportés.

Dans les réseaux numériques de transport d'informations connus, il existe des liaisons de transport d'informations bidirectionnelles permanentes entre des sites distants. De telles liaisons sont connues sous le nom de « liaisons louées brassées ». Une telle liaison comporte classiquement deux modulateurs-démodulateurs, appelés ici modems C et D, raccordés à des multiplexeurs temporels A et B respectifs, les multiplexeurs étant reliés entre eux par une première liaison inter-multiplexeur.

Les modems C et D sont respectivement installés sur un site E et un site F. Ils sont reliés par l'intermédiaire de liaisons de transmission d'informations respectives, dites d'entrée, aux multiplexeurs A et B, le modem C étant relié au multiplexeur A et le modem D au multiplexeur B.

Les multiplexeurs A et B sont connus sous le nom de « brasseurs d'intervalles de temps ». Ce sont des multiplexeurs temporels de type DACS (Data Access Cross connect System) de la société LUCENT TECHNOLOGIES (16, av. Descartes, 92 350 Le Plessis Robinson, France). Ces multiplexeurs aiguillent le flux d'informations des liaisons d'entrée, telles que celle reliant le multiplexeur A au site E, vers une ou plusieurs liaisons inter-multiplexeurs. Les liaisons d'entrée et les liaisons inter-multiplexeurs ont généralement la même capacité maximale en terme de débit d'informations par seconde, c'est-à-dire par exemple 2 Mbit/s. Toutefois, les liaisons d'entrée sont utilisées pour transmettre des informations à un débit nettement inférieur à la capacité maximale de la liaison d'entrée.

La première liaison inter-multiplexeur entre les multiplexeurs C et D transporte le flux d'informations transmis entre les deux sites distants E et F, mais également d'autres flux d'informations transmis entre d'autres sites.

Par ailleurs, les multiplexeurs C et D sont raccordés à une unité de commande à distance de ces derniers et reliés entre eux par une seconde liaison inter-multiplexeur.

Lorsque la première liaison inter-multiplexeur doit être interrompue, l'unité de commande envoie des instructions aux multiplexeurs C et D pour dévier le flux d'informations transmis entre les deux sites E et F, vers la seconde liaison inter-multiplexeur. Pour cela le procédé actuellement utilisé, comporte une première et une seconde étapes, exécutées séquentiellement et successivement.

La première étape consiste à dévier le flux d'informations émis à partir du site E pour que celui-ci emprunte la seconde liaison inter-multiplexeur. Cette première étape consiste à exécuter successivement les deux opérations suivantes :
1. L'unité de commande envoie une instruction de diffusion au multiplexeur A pour que celui-ci transmette le flux d'informations émis à partir du site E, à la fois sur la première et la seconde liaisons inter-multiplexeurs.
2. L'unité de commande envoie une instruction de déviation au multiplexeur B pour que celui-ci d'une part arrête de transmettre vers le site F le flux informations reçu par l'intermédiaire de la première liaison inter-multiplexeur, et que d'autre part, il transmette au site F le flux informations reçu par l'intermédiaire de la seconde liaison inter-multiplexeur. A l'issue de ces deux opérations, le flux informations émis à partir du site E est transporté par la seconde liaison inter-multiplexeur, tandis que le flux informations émis à partir du site F est transporté par la première liaison.

La seconde étape consiste donc à dévier le flux d'informations émis à partir du site F vers le site E pour que celui-ci emprunte la seconde liaison inter-multiplexeur. Cette seconde étape comporte deux opérations identiques à celles décrites ci-dessus sauf que dans celles-ci les lettres A, B, E et F sont respectivement remplacées par les lettres B, A, F et E.

A l'issue de la première et de la seconde étapes précédentes la première liaison inter-multiplexeur n'est plus utilisée pour transporter le flux d'informations entre les sites E et F.

Les deux étapes précédentes sont ensuite répétées pour dévier l'un après l'autre chacun des flux d'informations transportés par la première liaison inter-multiplexeur.

A l'issue de cette répétition des première et seconde étapes, l'ensemble des flux d'informations transportés par la première liaison inter-multiplexeur a été dévié vers la seconde liaison inter-multiplexeur. Dès lors, il est possible d'interrompre cette première liaison inter-multiplexeur pour effectuer des opérations de maintenance sans interrompre le flux d'informations entre les sites distants tels que les sites E et F.

Un tel procédé pour dévier l'ensemble du flux d'informations transporté par la première liaison nécessite actuellement environ 10 secondes pour être exécuté. Pendant ces 10 secondes, il est nécessaire de demander aux utilisateurs de la première liaison d'interrompre toute transmission d'informations pour éviter de perdre des données.

De plus, le temps d'interruption précédent augmente proportionnellement au nombre de sites reliés par l'intermédiaire de la première liaison inter-multiplexeur.

La présente invention vise à remédier à ces inconvénients en proposant un procédé plus rapide pour interrompre une liaison entre deux multiplexeurs temporels sans interrompre le flux d'informations transporté par cette liaison.

Elle a donc pour objet un procédé pour dévier au moins un flux d'informations transporté par une première liaison entre deux multiplexeurs temporels vers au moins une seconde liaison entre ces deux mêmes multiplexeurs, chacun desdits multiplexeurs comportant des instructions de déviation dudit au moins un flux d'informations de la première liaison vers ladite au moins une seconde liaison, caractérisé en ce qu'il comporte une première étape d'activation simultanée dans les deux multiplexeurs de ces instructions de déviation du flux de la première liaison vers la seconde liaison.

Suivant d'autres caractéristiques d'un procédé conforme à l'invention :
- la première étape d'activation est précédée d'une étape de raccordement d'au moins une liaison supplémentaire de réserve, de manière à former ladite au moins une seconde liaison ;
- la première étape d'activation est suivie d'une seconde étape d'activation simultanée dans les deux multiplexeurs d'instructions de déviation du flux d'informations de la seconde liaison vers la première liaison ;
- chacun des flux de l'ensemble des flux d'informations transportés par la première liaison sont déviés vers ladite au moins une seconde liaison ;
- il comporte une étape de regroupement des instructions de déviation dans des modules de données et en ce que l'étape d'activation simultanée comporte l'opération d'activer ces modules de données.

L'invention a également pour objet un système pour dévier un flux d'informations transporté par une première liaison entre deux multiplexeurs temporels vers au moins une seconde liaison entre ces deux mêmes multiplexeurs, chacun desdits multiplexeurs comportant des instructions de déviation dudit au moins un flux d'informations de la première liaison vers ladite au moins une seconde liaison, caractérisé en ce qu'il comporte des moyens d'activation simultanée dans les deux multiplexeurs de ces instructions de déviation du flux de la première liaison vers la seconde liaison.

Suivant d'autres caractéristiques d'un système conforme à l'invention :
- il comporte une liaison supplémentaire de réserve raccordée entre les deux multiplexeurs ;
- les multiplexeurs comportent des moyens d'activation simultanée dans les deux multiplexeurs d'un module de données préétabli comportant les instructions de déviation ;
- lesdits multiplexeurs sont des multiplexeurs de type DACS (Système de Connexion transversale d'Accès Digitaux).

On comprend donc que dans un procédé conforme à l'invention, des instructions de déviation sont exécutées simultanément sur les deux multiplexeurs. Ainsi, il n'est plus nécessaire de mettre en oeuvre des instructions de diffusion et un procédé conforme à l'invention est plus rapide que les procédés connus.

De plus, certains multiplexeurs, tels que les multiplexeurs de type DACS, permettent de regrouper les instructions de déviation dans des modules de données qui peuvent être exécutés en une seule opération et très rapidement. Ainsi, lorsqu'une liaison inter-multiplexeur transportant plusieurs flux d'informations doit être interrompue, les instructions de déviation de chacun des flux concernés sont regroupées dans ces modules de données. Ces modules de données sont alors exécutés simultanément sur chacun des multiplexeurs conformément au procédé de l'invention. Cette unique opération remplace donc les opérations successives de déviation de chacun des flux d'informations transportés par la liaison inter-multiplexeur, ce qui rend un procédé conforme à l'invention encore plus rapide.

L'invention sera mieux comprise à la lecture de la description qui va suivre, donnée uniquement à titre d'exemple et faite en se référant aux dessins sur lesquels :
- la figure 1 représente plusieurs sites distants reliés entre eux par l'intermédiaire de liaison de transport d'informations bidirectionnelles permanentes ; et
- la figure 2 représente un procédé pour dévier l'ensemble des flux d'informations transportés par une liaison entre deux multiplexeurs temporels conforme à l'invention.

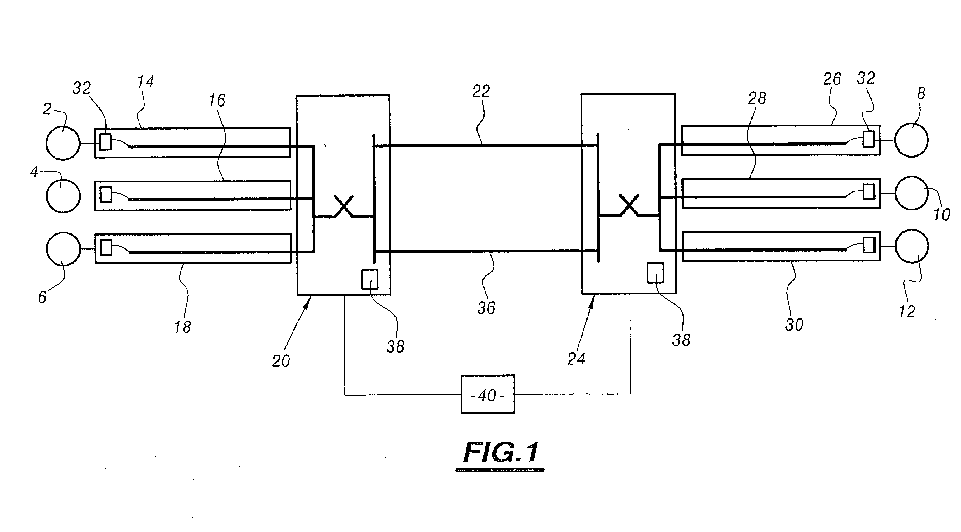

La figure 1 représente trois sites 2, 4, 6 reliés par des liaisons de transport d'informations numériques bidirectionnelles permanentes à des sites respectifs 8, 10, et 12.

Les trois liaisons permanentes sont réalisées à partir de premières liaisons de transmission d'informations respectives 14, 16 et 18 entre les sites 2, 4 et 6 et un premier multiplexeur temporel 20, d'une liaison inter-multiplexeur 22 entre le premier multiplexeur 20 et un second multiplexeur temporel 24, et de secondes liaisons de transmission d'informations respectives 26, 28 et 30 entre le multiplexeur 24 et les sites 8, 10 et 12.

Les premières liaisons 14, 16 et 18 sont par exemple similaires. Ainsi seule la liaison 14 sera décrite ici en détail.

La première liaison 14 comporte deux extrémités. La première extrémité est raccordée à un équipement terminal 32 tandis que la seconde extrémité est raccordée à une voie d'entrée du multiplexeur 20.

L'équipement terminal 32 est destiné à servir d'interface entre un réseau de transport d'informations du site 2 et la liaison 14. Cet équipement terminal 32 est, par exemple, un modulateur-démodulateur classique, connu sous le nom de modem. Il est installé sur le site 2.

La première liaison 14 est une liaison numérique de transport d'informations. Sa capacité maximale en terme de débit d'informations est de 2Mbit/s, toutefois elle est destinée à transmettre des informations avec un débit de 64 Kbit/s.

Le multiplexeur 20 est apte à multiplexer temporellement les flux d'informations des liaisons 14, 16 et 18 et à transmettre les flux d'informations multiplexés par l'intermédiaire de la liaison inter-multiplexeur 22 au second multiplexeur 24. Pour cela, il est raccordé à l'extrémité des liaisons 14, 16 et 18 et à l'extrémité de la liaison inter-multiplexeur 22.

Par ailleurs, le multiplexeur 20 est également raccordé au multiplexeur 24 par une seconde liaison inter-multiplexeur 36 dont l'intérêt apparaîtra à la lecture de la suite de la description. Cette seconde liaison inter-multiplexeur 36 n'étant pas utilisée en temps normal, elle sera appelée ici liaison de réserve.

Le multiplexeur 20 est également adapté pour exécuter des instructions de déviation. Ces instructions de déviation sont destinées à dévier un flux d'informations transporté par la liaison inter-multiplexeur 22 vers la liaison de réserve 36. Ainsi, le multiplexeur 20 est apte, par exemple, à dévier le flux d'informations transporté en entrée par la liaison 14 pour que celui-ci soit transporté, en sortie, par la liaison de réserve 36. De façon similaire le multiplexeur 20 est apte à dévier les flux d'informations transportés par les liaisons 16 et 18.

Avantageusement, le multiplexeur temporel 20 est apte à exécuter très rapidement plusieurs instructions de déviation. Par exemple, les instructions de déviation sont regroupées dans un module de données préétabli qui peut être activé en une seule opération.

Le multiplexeur 20 est du type "Brasseur d'intervalles de temps". A titre d'exemple, le multiplexeur 20 est un multiplexeur temporel de type DACS (Digital Access Cross Connect System) de la société Lucent Technology. En effet, ce type de multiplexeur comporte des instructions de déviation et ces instructions peuvent être regroupées dans des modules de données 38, c'est-à-dire ici dans des fichiers activables en une seule opération. Ainsi, ce multiplexeur est apte à dévier très rapidement les flux d'informations de plusieurs liaisons d'entrée vers d'autres liaisons inter-multiplexeur correspondantes.

Les liaisons inter-multiplexeurs 22 et 36 sont, par exemple, identiques.

La liaison 22 est destinée à transporter des trames successives d'informations conformément à un procédé classique de multiplexage temporel de l'information. La liaison 22 a une capacité maximale en terme de débit d'informations égale à celle de la liaison 14, c'est-à-dire ici 2Mbit/s.

Le multiplexeur 24 est identique au multiplexeur 20 et ne sera pas décrit plus en détail.

Les secondes liaisons 26, 28 et 30 relient le multiplexeur 24 aux sites respectifs 8, 10 et 12. Ces secondes liaisons sont similaires aux premières liaisons 14,16 et 18 et ne seront pas décrites plus en détail.

Par ailleurs, une unité 40 d'activation simultanée d'instructions de déviation est raccordée aux multiplexeurs 20 et 24. Dans l'exemple de réalisation décrit ici, cette unité 40 est apte à activer quasi-simultanément les fichiers 38 comportant les instructions de déviation, dans les multiplexeurs 20 et 24. Dans son mode de réalisation le plus simple cette unité 40 comporte des opérateurs auprès de chaque multiplexeur, aptes à activer les fichiers 38 et une liaison téléphonique entre eux. Dans un autre mode de réalisation, l'unité 40 comporte des moyens de commande à distance des deux multiplexeurs pour activer simultanément les instructions de déviation.

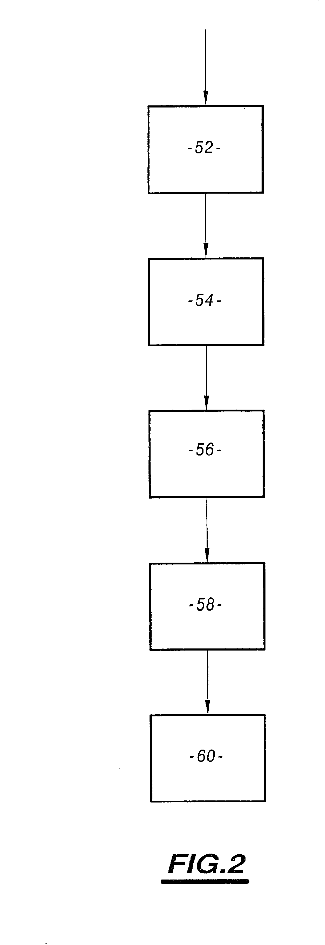

La figure 2 représente un procédé pour dévier l'ensemble du flux d'informations transporté par la liaison inter-multiplexeur 22 vers la liaison inter-multiplexeur 36 dans le cas particulier où les multiplexeurs 20 et 24 sont des multiplexeurs de type DACS tels que mentionnés précédemment.

Le procédé de la figure 2 comporte cinq étapes successives 52, 54, 56, 58 et 60.

L'étape 52 consiste à établir pour chacun des flux d'informations utilisant la liaison inter-multiplexeur 22, des instructions de déviation de ces flux vers la liaison de réserve 36. Dans le cas des multiplexeurs de type DACS cela consiste à établir un fichier 38 comportant ces instructions de déviation conformément au manuel d'exploitation de ces multiplexeurs (Manuel d'exploitation DACS II A2/(E) CEF version 8.2 9554 507 06153 février 1999, Chapitre 7.3.1).

L'étape 54 consiste à activer simultanément dans les multiplexeurs 20 et 24 les nouvelles instructions de déviation, c'est-à-dire ici à charger et à activer les fichiers 38 dans les deux multiplexeurs de type DACS. Dans le mode de réalisation le plus simple, cette étape est réalisée par les opérateurs de l'unité 40 qui synchronisent leurs actions à l'aide de la liaison téléphonique.

L'étape 56 consiste à effectuer les opérations de maintenance ou de dépannage de la liaison 22. Lorsque ces opérations sont finies l'étape 58 débute.

L'étape 58 est une étape d'établissement des instructions de déviation nécessaires pour dévier l'ensemble des flux d'informations transporté par la liaison de réserve 36 vers la liaison inter-multiplexeur 22. Cette étape est analogue à l'étape 52 et ne sera pas décrite plus en détail.

L'étape 60 consiste à activer simultanément les fichiers 38 établis lors de l'étape 58. Cette étape est analogue à l'étape 54 et ne sera pas décrite plus en détail.

A l'aide du procédé de la figure 2, le temps nécessaire pour dévier l'ensemble du flux d'informations de la liaison inter-multiplexeur 22 vers la liaison de réserve 36 a été réduit à environ 30 milli-secondes alors qu'auparavant il était de 10 secondes.

En variante, l'étape 58 est exécutée en même temps que l'étape 52.

En variante, le procédé de la figure 2 est précédé d'une étape de raccordement de la liaison de réserve 36 lorsque celle-ci n'est pas encore raccordée entre les deux multiplexeurs 20 et 24.

En variante, lorsque les multiplexeurs utilisés ne comportent pas de modules de données tels que les modules de données 38 mais d'autres moyens permettant d'exécuter rapidement plusieurs instructions de déviation ces moyens sont utilisés à la place des modules de données 38.

Un procédé, non représenté, pour dévier un seul flux d'informations transporté par la liaison 22 vers la liaison de réserve 36 découle du procédé de la figure 2. Pour cela :
- les étapes 52 et 58 sont remplacées par des étapes consistant à établir des instructions de déviation de ce flux d'informations, vers, respectivement, la liaison de réserve 36 et la liaison 22;
- les étapes 54 et 60 sont remplacées par des étapes d'activation simultanée dans les deux multiplexeurs 20, 24 des instructions de déviation établies précédemment.

Ce procédé est plus rapide que les procédés connus puisqu'il ne met pas en oeuvre d'opérations de diffusion.

Finalement un autre mode de réalisation d'un procédé conforme à l'invention, pour dévier l'ensemble des flux d'informations transportés par la liaison 22 vers la liaison de réserve 36 consiste à répéter pour chacun des flux d'informations transporté par la liaison 22 le procédé, non représenté, pour dévier un seul flux d'informations.

Le procédé décrit s'adapte aisément au cas où plus de deux multiplexeurs temporels sont utilisés.

Le procédé décrit s'adapte aisément au cas où la liaison 22 est déviée vers, non pas une, mais plusieurs autres liaisons inter-multiplexeurs.

On remarquera qu'un procédé conforme à l'invention ne nécessite pas nécessairement d'unité de commande apte à commander à distance les multiplexeurs 20 et 24 pour être mis en oeuvre.

## Revendications

1. Procédé pour dévier au moins un flux d'informations transporté par une première liaison (22) entre deux multiplexeurs temporels (20, 24) vers au moins une seconde liaison (36) entre ces deux mêmes multiplexeurs, chacun desdits multiplexeurs (20, 24) comportant des instructions de déviation dudit au moins un flux d'informations de la première liaison vers ladite au moins une seconde liaison, **caractérisé en ce qu'**il comporte une première étape (54) d'activation simultanée dans les deux multiplexeurs (20, 24) de ces instructions de déviation du flux de la première liaison vers la seconde liaison, et **en ce que** cette première étape d'activation (54) est précédée d'une étape de raccordement d'au moins une liaison (36) supplémentaire de réserve, de manière à former ladite au moins une seconde liaison.

2. Procédé selon la revendication 1, **caractérisé en ce que** la première étape d'activation est suivie, dans les deux multiplexeurs (20, 24), d'une seconde étape (60) d'activation simultanée d'instructions de déviation du flux d'informations de la seconde liaison (36) vers la première liaison (22).

3. Procédé selon l'une quelconque des revendications précédentes, **caractérisé en ce que** chacun des flux de l'ensemble des flux d'informations transportés par la première liaison sont déviés vers ladite au moins une seconde liaison.

4. Procédé selon l'une quelconque des revendications précédentes, **caractérisé en ce qu'**il comporte une étape de regroupement des instructions de déviation dans des modules de données (38) et **en ce que** l'étape d'activation simultanée comporte l'opération d'activer ces modules de données.
